(19) Europäisches Patentamt
European Patent Office
Office européen des brevets

(11) **EP 4 737 191 A1**

(12) **EUROPEAN PATENT APPLICATION**

(43) Date of publication:
**06.05.2026 Bulletin 2026/19**

(21) Application number: **25209372.9**

(22) Date of filing: **17.10.2025**

(51) International Patent Classification (IPC):
**B60L 15/20** (2006.01)          **B60L 50/60** (2019.01)

(52) Cooperative Patent Classification (CPC):
**B60L 15/20; B60L 15/2045;** B60L 50/60;
B60L 2240/12; B60L 2240/14; B60L 2240/16;
B60L 2240/423; B60L 2250/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.10.2024 JP 2024191803**

(71) Applicant: **TOYOTA JIDOSHA KABUSHIKI
KAISHA**
**Toyota-shi, Aichi-ken 471-8571 (JP)**

(72) Inventor: **FUJII, Kazuki**
**Toyota-shi, 471-8571 (JP)**

(74) Representative: **TBK**
**Bavariaring 4-6**
**80336 München (DE)**

(54) **BATTERY ELECTRIC VEHICLE AND CONTROL METHOD**

(57)    A battery electric vehicle includes one or more processors (102) that control an output of an electric motor (2) based on an operated state of a driving operation member (22, 24) and a travel state of the battery electric vehicle and control a gear stage of a transmission (18) in accordance with a shifting schedule. A first shifting schedule is a shifting schedule for when the battery electric vehicle is not in an on-demand mode. While the battery electric vehicle is in the on-demand mode, the one or more processors (102) set a shifting schedule to a second shifting schedule. The second shifting schedule is configured such that a change to the gear stage on a high speed side is restricted compared with the first shifting schedule.

FIG. 11

EP 4 737 191 A1

**Description**

BACKGROUND OF THE INVENTION

1. Field of the Invention

The present disclosure relates to a battery electric vehicle having an electric motor as a drive source, and to a control device and a control method. In particular, the present disclosure relates to a battery electric vehicle equipped with a transmission that transmits an output of an electric motor to a drive wheel after changing the output depending on a gear stage.

2. Description of Related Art

An electric motor can be controlled so as to output desired motor torque through control of an applied voltage or a field magnet. A technology has been under consideration that takes advantage of this to reproduce various driving sensations in a battery electric vehicle by appropriately controlling an electric motor of the battery electric vehicle.
One of elements that characterize driving sensations is an acceleration sensation in response to a driver's driving operation. The acceleration sensation is an important point when a driver enjoys driving. In particular, preference for an acceleration sensation is different from one driver to another. Drivers sometimes feel like enjoying the acceleration sensations of various mobilities depending on their moods.
In view of this, the inventors involved with the present disclosure have been exploring an "on-demand mode" that simulatively reproduces the acceleration sensations of a plurality of virtual mobilities in one battery electric vehicle by using a plurality of models modeled after these virtual mobilities. In the on-demand mode, an electric motor is controlled so as to reproduce, in the battery electric vehicle, an acceleration property of a virtual mobility selected from the virtual mobilities when it is driven.
Meanwhile, a battery electric vehicle equipped with a transmission has been hitherto under consideration. For example, Japanese Unexamined Patent Application Publication No. 2019-178741 (JP 2019-178741 A) discloses a technology that, concerning a battery electric vehicle equipped with a transmission, improves the driving performance by shortening a gear shifting time. Equipping a battery electric vehicle with a transmission can improve the power performance of the battery electric vehicle.
Another literature that indicates the technological level of this technical field is Japanese Unexamined Patent Application Publication No. 2018-191366 (JP 2018-191366 A).

SUMMARY OF THE INVENTION

A case will be considered where a battery electric vehicle equipped with a transmission travels in the on-demand mode. The battery electric vehicle in the on-demand mode is controlled so as to reproduce the acceleration property of a virtual mobility in response to a driver's driving operation. On the other hand, the transmission is controlled in accordance with a predetermined shifting schedule in the battery electric vehicle. Thus, the reproducibility of the acceleration property of the virtual mobility can be impaired due to downshifting of a gear stage that occurs depending on the driver's driving operation. One example is a case where the driver performs kickdown of an accelerator pedal to quickly accelerate the battery electric vehicle while the battery electric vehicle is executing steady travel at between a medium speed and a high speed.
The present disclosure provides a technology that can improve the reproducibility of the acceleration property of a virtual mobility in a battery electric vehicle equipped with a transmission and in a control device and a control method.
A first aspect of implementation of the present disclosure relates to a battery electric vehicle having an electric motor as a drive source. The battery electric vehicle includes a driving operation member configured to be used for driving, a transmission configured to transmit an output of the electric motor to a drive wheel of the battery electric vehicle after changing the output depending on a gear stage, and one or more processors. The one or more processors are configured to control the output of the electric motor based on an operated state of the driving operation member and a travel state of the battery electric vehicle. The one or more processors are configured to communicate with one or more storage devices. The one or more storage devices are configured to manage a plurality of on-demand models modeled after a plurality of virtual mobilities different from one another in driving environment properties in response to driving operation of a driver. The one or more processors are configured to, while the battery electric vehicle is not in an on-demand mode, control the gear stage of the transmission in accordance with a first shifting schedule. The one or more processors are configured to, while the battery electric vehicle is in the on-demand mode: control the gear stage of the transmission in accordance with a second shifting schedule; acquire, from the one or more storage devices, a target on-demand model corresponding to a target virtual mobility selected from the virtual mobilities; based on the operated state of the driving operation member and the travel state of the battery electric vehicle, calculate, using the target on-demand model, a virtual acceleration of the target virtual mobility in response to driving operation of the driver; and control the output of the electric motor such that an acceleration of the battery electric vehicle equals the virtual acceleration. The second shifting schedule is configured such that a change to the gear stage on a high speed side is restricted compared with the first shifting schedule.

The battery electric vehicle according to the first aspect of implementation of the present disclosure may further include the one or more storage devices.

In the battery electric vehicle according to the first aspect of implementation of the present disclosure, the second shifting schedule may be configured such that a change to the gear stage on the high speed side is not performed as long as the battery electric vehicle is able to maintain a maximum value of a drive force that the battery electric vehicle is able to output at a current vehicle speed of the battery electric vehicle.

In the battery electric vehicle according to the first aspect of implementation of the present disclosure, the second shifting schedule may be configured such that the gear stage is set to a gear stage with a highest gear ratio regardless of the operated state of the driving operation member and the travel state of the battery electric vehicle.

In the battery electric vehicle according to the first aspect of implementation of the present disclosure, the one or more processors may be further configured to, while the battery electric vehicle is in the on-demand mode: determine whether the battery electric vehicle is in a fuel efficiency-prioritized situation in which prioritizing fuel efficiency is required; and control the gear stage of the transmission in accordance with the first shifting schedule while the battery electric vehicle is in the fuel efficiency-prioritized situation.

In the battery electric vehicle according to the first aspect of implementation of the present disclosure, the one or more processors may be configured to, while the battery electric vehicle is in the on-demand mode, acquire a state of charge of a battery of the battery electric vehicle; and while the state of charge of the battery is equal to or lower than a threshold value, determine that the battery electric vehicle is in the fuel efficiency-prioritized situation.

In the battery electric vehicle according to the first aspect of implementation of the present disclosure, the one or more processors may be further configured to, while the battery electric vehicle is in the on-demand mode: determine whether the battery electric vehicle is in a high-speed travel executing situation in which executing high-speed travel is required; and control the gear stage of the transmission in accordance with the first shifting schedule while the battery electric vehicle is in the high-speed travel executing situation.

In the battery electric vehicle according to the first aspect of implementation of the present disclosure, the one or more processors may be further configured to, while the battery electric vehicle is in the on-demand mode, control the gear stage of the transmission in accordance with the first shifting schedule instead of the second shifting schedule in a case that the target virtual mobility corresponds to any one of one or more specific mobilities.

In the battery electric vehicle according to the first aspect of implementation of the present disclosure, the one or more processors may be configured to, while the battery electric vehicle is in the on-demand mode: calculate a target drive force of the battery electric vehicle for adapting the acceleration of the battery electric vehicle to the virtual acceleration; and change motor torque output by the electric motor so as to give the target drive force to the battery electric vehicle.

In the battery electric vehicle according to the first aspect of implementation of the present disclosure: each of the on-demand models may have a parameter relating to the driving environment property; and the one or more processors may be configured to, while the battery electric vehicle is in the on-demand mode, set the parameter of the target on-demand model depending on the target virtual mobility.

The battery electric vehicle according to the first aspect of implementation of the present disclosure may further include a speaker. The one or more processors may be further configured to, while the battery electric vehicle is in the on-demand mode: based on the operated state of the driving operation member and the travel state of the battery electric vehicle, generate, using the target on-demand model, a virtual sound that is supposed to be audible to the driver in the target virtual mobility in response to driving operation of the driver; and output the virtual sound from the speaker.

In the battery electric vehicle according to the first aspect of implementation of the present disclosure, the virtual mobilities may include an engine vehicle equipped with an internal combustion engine, and while the target virtual mobility is the engine vehicle, the virtual sound may be a pseudo-engine sound generated by the internal combustion engine of the target virtual mobility.

A second aspect of the present disclosure relates to a control device of a battery electric vehicle equipped with an electric motor as a drive source, a driving operation member configured to be used for driving, and a transmission configured to transmit an output of the electric motor to a drive wheel of the battery electric vehicle after changing the output depending on a gear stage. The control device includes one or more processors. The one or more processors are configured to control the output of the electric motor based on an operated state of the driving operation member and a travel state of the battery electric vehicle. The one or more processors are configured to communicate with one or more storage devices. The one or more storage devices are configured to manage a plurality of on-demand models modeled after a plurality of virtual mobilities different from one another in driving environment properties in response to driving operation of a driver. The one or more processors are configured to, while the battery electric vehicle is not in an on-demand mode, control the gear stage of the transmission in accordance with a first shifting schedule. The one or more processors are configured to, while the battery electric vehicle is in the on-demand mode: control the gear stage of the transmission in accordance with a second shifting schedule; acquire, from the one or more storage devices, a target on-demand model corresponding to a target virtual mobility selected from the virtual mobilities; based on the operated state of the driving operation member and the travel state of the battery electric vehicle, calculate, using the target on-demand model, a virtual acceleration of the target virtual mobility in response to driving operation of the driver; and control the output of the electric motor such that an acceleration of the battery electric vehicle becomes the virtual acceleration. The second shifting schedule is configured such that a change to a gear stage on a high speed side is restricted compared with the first shifting schedule.

A third aspect of the present disclosure relates to a control method of a battery electric vehicle equipped with an electric motor as a drive source, a driving operation member configured to be used for driving, a transmission configured to transmit an output of the electric motor to a drive wheel of the battery electric vehicle after changing the output depending on a gear stage, and a control device. The control method includes controlling the output of the electric motor based on an operated state of the driving operation member and a travel state of the battery electric vehicle. The control method includes communicating with one or more storage devices. The one or more storage devices are configured to manage a plurality of on-demand models modeled after a plurality of virtual mobilities different from one another in driving environment properties in response to driving operation of a driver. The control method includes, while the battery electric vehicle is not in an on-demand mode, controlling the gear stage of the transmission in accordance with a first shifting schedule. The control method includes, while the battery electric vehicle is in the on-demand mode: controlling the gear stage of the transmission in accordance with a second shifting schedule; acquiring, from the one or more storage devices, a target on-demand model corresponding to a target virtual mobility selected from the virtual mobilities; based on the operated state of the driving operation member and the travel state of the battery electric vehicle, calculating, using the target on-demand model, a virtual acceleration of the target virtual mobility in response to driving operation of the driver; and controlling the output of the electric motor such that an acceleration of the battery electric vehicle becomes the virtual acceleration. The second shifting schedule is configured such that a change to a gear stage on a high speed side is restricted compared with the first shifting schedule.

With the present disclosure, when the battery electric vehicle is in the on-demand mode, the gear stage of the transmission is controlled in accordance with the second shifting schedule. The second shifting schedule is configured such that a change to the gear stage on the high speed side is restricted compared with the first shifting schedule for when the battery electric vehicle is not in the on-demand mode. This can reduce the likelihood that downshifting of the gear stage that does not appear in behavior of the target virtual mobility may occur due to the driver's driving operation. As a result, the reproducibility of the acceleration property of the target virtual mobility in the on-demand mode can be improved.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a view showing a configuration of a battery electric vehicle according to an embodiment;
FIG. 2 is a tree diagram showing one example of inputs of selection that an HMI receives regarding a control mode of the battery electric vehicle according to the embodiment;
FIG. 3 is a view showing one example of a functional configuration of a control device that functions as a drive control device;
FIG. 4 is a view showing one example of an acceleration property of a target virtual mobility reproduced in the battery electric vehicle;
FIG. 5 is a view showing one example of a functional configuration of a normal mode calculation unit;
FIG. 6 is a view showing one example of a first shifting schedule;
FIG. 7 is a view showing one example of a functional configuration of an on-demand mode calculation unit;
FIG. 8 is a view showing one example of cases where the reproducibility of the acceleration property of the target virtual mobility is impaired;
FIG. 9 is a view showing one example of a second shifting schedule;
FIG. 10 is a view showing one example of a configuration of an on-demand model;
FIG. 11 is a flowchart showing a processing flow of a process that is executed by the drive control device according to the embodiment;
FIG. 12 is a view showing one example of a functional configuration of an on-demand mode calculation unit according to a modified example;
FIG. 13 is a flowchart showing a processing flow of a process that is executed by a drive control device according to the modified example;
FIG. 14 is a flowchart showing a processing flow of a process that is executed by the drive control device in a shifting schedule setting process; and

FIG. 15 is a view showing one example of a functional configuration of a control device that functions as an on-board equipment control device.

DETAILED DESCRIPTION OF EMBODIMENTS

In the following, an embodiment of the present disclosure will be described with reference to the drawings. The same or corresponding parts are denoted by the same reference signs throughout the drawings, and description thereof will be simplified or omitted.

1 Configuration of Power System of Battery Electric Vehicle

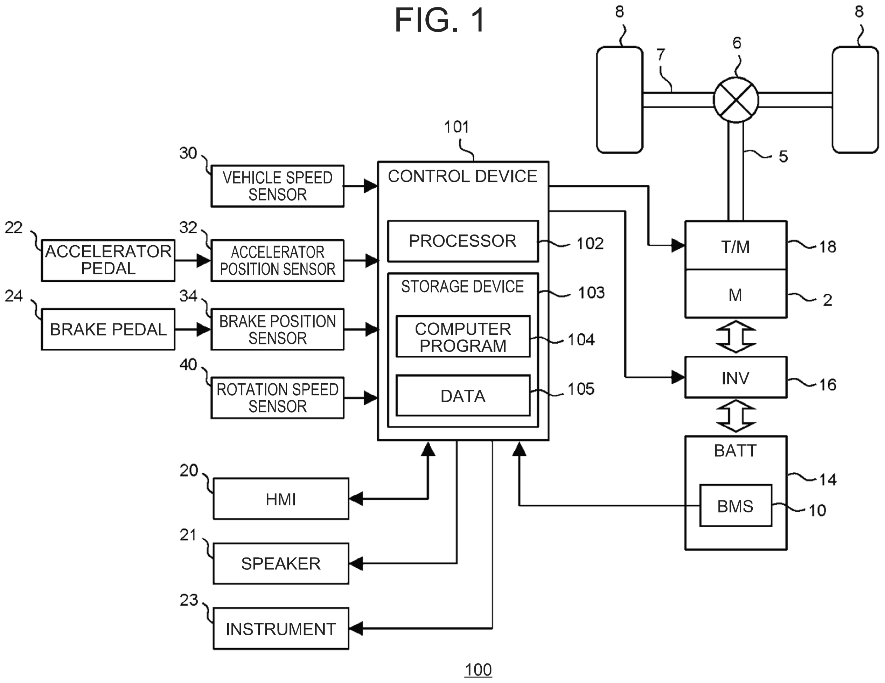

FIG. 1 is a view schematically showing a configuration of a battery electric vehicle 100 according to the embodiment of the present disclosure. First, a configuration of a power system of the battery electric vehicle 100 will be described with reference to FIG. 1.

The battery electric vehicle 100 includes an electric motor (M) 2 as a traction drive source. The electric motor 2 is, for example, a three-phase alternating-current motor. An inverter (INV) 16 is mounted on the electric motor 2. An output shaft of the electric motor 2 is connected to a transmission (T/M) 18. A speed reducer may be provided between the output shaft of the electric motor 2 and the transmission 18. The transmission 18 is connected to a differential gear 6 by a propeller shaft 5. The differential gear 6 is connected to right and left drive wheels 8 by right and left driveshafts 7. The drive wheels 8 may be front wheels or may be rear wheels. This configuration imparts to the transmission 18 a function of transmitting an output of the electric motor 2 to the drive wheels 8 of the battery electric vehicle 100 after changing the output according to a gear stage. Switching of the gear stage of the transmission 18 is controlled by a control device 101 to be described later. In particular, the control device 101 controls the gear stage of the transmission 18 in accordance with a shifting schedule.

The inverter 16, the electric motor 2, the speed reducer, and the differential gear 6 may be integrally configured as an e-axle. In this case, the battery electric vehicle 100 does not include the propeller shaft 5 and the e-axle is connected to the driveshafts 7. As another modified example, the battery electric vehicle 100 may have a configuration of four-wheel drive. For example, the battery electric vehicle 100 may include a transfer connected to an output shaft of the transmission 18, and may be configured to distribute an output of the transmission 18 to the front wheels and the rear wheels by the transfer.

The inverter 16 is connected to a battery (BATT) 14. The inverter 16 is, for example, a voltage-type inverter and controls motor torque of the electric motor 2 by PWM control. That is, the battery electric vehicle 100 is a battery electric vehicle (BEV) that travels on electric energy stored in the battery 14 by using the electric motor 2 as a drive source.

2 Configuration of Control System of Battery Electric Vehicle

Subsequently, a configuration of a control system of the battery electric vehicle 100 will be described with reference to FIG. 1.

The battery electric vehicle 100 includes a vehicle speed sensor 30. The vehicle speed sensor 30 outputs a signal indicating a vehicle speed of the battery electric vehicle 100. At least one of wheel speed sensors (not shown) respectively provided on the right and left front wheels and the right and left rear wheels is used as the vehicle speed sensor 30.

The battery electric vehicle 100 further includes an accelerator position sensor 32. The accelerator position sensor 32 is provided on an accelerator pedal 22 and outputs a signal indicating an operated state of the accelerator pedal 22. The operated state of the accelerator pedal 22 typically includes an accelerator operation amount and an accelerator operation speed. The battery electric vehicle 100 may include, instead of the accelerator pedal 22, a hand-operated lever-type accelerator operation device or a dial-type accelerator operation device. Also in this case, the accelerator position sensor 32 outputs a signal indicating an operated state of such an accelerator operation device.

The battery electric vehicle 100 further includes a brake position sensor 34. The brake position sensor 34 is provided on a brake pedal 24 and outputs a signal indicating an operated state of the brake pedal 24. The operated state of the brake pedal 24 typically includes a brake operation amount and a brake operation speed.

Each of the accelerator pedal 22 and the brake pedal 24 is one of driving operation members used for driving the battery electric vehicle 100. In addition, the battery electric vehicle 100 may include various types of driving operation members, such as a steering wheel, for driving involved with steering.

The battery electric vehicle 100 further includes a rotation speed sensor 40. The rotation speed sensor 40 is provided in the electric motor 2 and outputs a signal indicating a rotation speed of the electric motor 2.

The battery electric vehicle 100 further includes a battery management system (BMS) 10. The battery management system 10 is a device that monitors a cell voltage, current, temperature, etc., of the battery 14. In particular, the battery management system 10 has a function of estimating a state of charge (SOC) of the battery 14.

The battery electric vehicle 100 further includes a human-machine interface (HMI) 20. The HMI 20 presents various information to the driver through display or sound and receives various inputs from the driver. The HMI 20 is composed of displays (e.g.: a multi-information display, a meter display, and a multimedia display), a touch screen, switches (e.g.: a steering switch, a multimedia switch, and a door switch), a touch pad, a speakerphone, a microphone, etc. For example, the HMI 20 displays various information on the display and receives inputs from the driver regarding the displayed contents through touch operation on the touch screen.

The battery electric vehicle 100 further includes a speaker 21. The speaker 21 includes at least an in-vehicle speaker that emits sound inside a vehicle cabin of the battery electric vehicle 100. As another example, the speaker 21 may include an external speaker that emits sound to an outside of the battery electric vehicle 100. The battery electric vehicle 100 may include both of an in-vehicle speaker and an external speaker as the speaker 21. The speaker 21 may be configured as a part of the HMI 20. An output of the speaker 21 is controlled by the control device 101 to be described later.

The battery electric vehicle 100 further includes an instrument 23. The instrument 23 displays various information. Examples of the instrument 23 include a speedometer, an odometer, a tachometer, a trip meter, and a remaining battery indicator. The instrument 23 may be configured as a part of the HMI 20. Display of the instrument 23 is controlled by the control device 101 to be described later.

The battery electric vehicle 100 includes the control device 101. Various sensors and control target devices installed in the battery electric vehicle 100 are connected to the control device 101 by an on-board network, such as a control area network (CAN). Various sensors other than the vehicle speed sensor 30, the accelerator position sensor 32, the brake position sensor 34, and the rotation speed sensor 40 may be installed in the battery electric vehicle 100 and connected to the control device 101 through the on-board network.

Based on signals acquired from the sensors, the control device 101 generates control signals for various types of control of the battery electric vehicle 100. The control device 101 is typically an electronic control unit (ECU). The control device 101 may be a combination of a plurality of ECUs. The control device 101 includes one or more processors 102 (hereinafter referred to simply as the "processor 102") and one or more storage devices 103 (hereinafter referred to simply as the "storage device 103").

The processor 102 executes various processes. The processor 102 is formed by, for example, a general-purpose processor, a special-purpose processor, a central processing unit (CPU), a graphics processing unit (GPU), an application-specific integrated circuit (ASIC), a field-programmable gate array (FPGA), an integrated circuit, a conventional circuit, or a combination of one or more each of these. The processor 102 can be referred to also as "processing circuitry." The processing circuitry is hardware programmed to realize the function of the control device 101 or hardware that executes the function of the control device 101.

The storage device 103 stores various information needed to execute processes of the processor 102. The storage device 103 is formed by a recording medium, such as a random-access memory (RAM), a read-only memory (ROM), a solid-state drive (SSD), or a hard disk drive (HDD). The storage device 103 stores a computer program 104 that is executable in the processor 102 and various data 105. The computer program 104 is composed of a plurality of instruction codes that describes a process to be executed by the processor 102. The computer program 104 is recorded in a computer-readable recording medium. The function of the control device 101 is realized through cooperation between the processor 102 executing the computer program 104 and the storage device 103.

The control device 101 according to this embodiment has at least two control modes, namely, a normal mode and an on-demand mode regarding control of the battery electric vehicle 100. Control of the battery electric vehicle 100 executed by the control device 101 changes according to a selected control mode. In the following, the control modes of the battery electric vehicle 100 will be described.

3 Control Modes of Battery Electric Vehicle

As mentioned above, the control modes of the battery electric vehicle 100 include at least the two modes of the normal mode and the on-demand mode. The normal mode is a control mode in which control of the battery electric vehicle 100 is performed such that the battery electric vehicle 100 behaves as an ordinary BEV. On the other hand, the on-demand mode is a control mode in which the driving environment properties of a virtual mobility selected from a plurality of virtual mobilities (hereinafter referred to as a "target virtual mobility") are reproduced in the battery electric vehicle 100. When the battery electric vehicle 100 is in the on-demand mode, the control device 101 performs control of the battery electric vehicle 100 such that the driver can experience a driving environment as if driving the target virtual mobility. In particular, the driving environment properties of the target virtual mobility reproduced in the on-demand mode include an acceleration property of the virtual mobility in response to the driver's driving operation. Details of control of the battery electric vehicle 100 in each of the normal mode and the on-demand mode will be described later.

In the on-demand mode, the virtual mobilities include various mobilities different from one another in the driving environment properties in response to the driver's driving operation. "Mobility" is a generic term for conveyances that can be driven by drivers by operating the driving operation members. The virtual mobilities are typically vehicles having different driving environment properties from the battery electric vehicle 100. However, the virtual mobilities may also be various forms of vehicles, such as a motorbike or a train. Each virtual mobility may be based on an assumption of a real-life mobility or may virtually represent a mobility that does not exist in the reality. A difference in the acceleration property as a driving environment property is generally attributable to a difference in the configuration of a powertrain from a drive source to drive wheels or a difference in a control technique of the powertrain. Therefore, the virtual mobilities can also be considered as including various mobilities different from one another in at least some elements of the configuration or the control technique relating to the powertrain. In the following, the virtual mobilities are assumed to be vehicles to simplify the description.

A control mode is selected by the driver operating the HMI 20. The HMI 20 is configured to receive an input of selection of a control mode from the driver. Further, the HMI 20 is configured to receive an input of selection of a target virtual mobility from the driver regarding the on-demand mode.

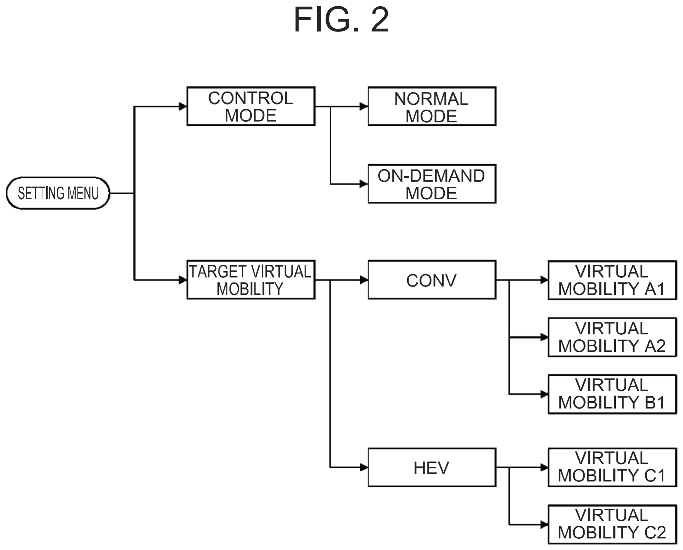

FIG. 2 is a tree diagram showing an example of inputs of selection that the HMI 20 receives. For example, the HMI 20 receives an input of selection from the driver as follows in accordance with the tree shown in FIG. 2 through display on the display or the touch screen.

First, the HMI 20 displays a setting menu screen on the display or the touch screen according to the driver's operation. In an initial screen of the setting menu screen, an option "control mode" and an option "target virtual mobility" are displayed. The option "control mode" is an option for receiving an input of selection of a control mode from the driver. The option "target virtual mobility" is an option for receiving an input of selection of a target virtual mobility from the driver.

When the option "control mode" is selected, an option "normal mode" and an option "on-demand mode" are displayed next in the setting menu screen. When the option "normal mode" is selected, the HMI 20 determines the control mode of the battery electric vehicle 100 to be the normal mode. When the option "on-demand mode" is selected, the HMI 20 determines that the control mode of the battery electric vehicle 100 to be the on-demand mode. Thus, the HMI 20 receives an input of selection of a control mode from the driver.

On the other hand, when the option "target virtual mobility" is selected, an option "CONV" and an option "HEV" are displayed next in the setting menu screen. The option "CONV" and the option "HEV" each represent a category of a plurality of virtual mobilities that is selectable in the on-demand mode. CONV is a category indicating a conventional vehicle equipped with a conventional internal combustion engine. HEV is a category indicating a hybrid electric vehicle. When the option "CONV" is selected, an option "virtual mobility A1," an option "virtual mobility A2," and an option "virtual mobility B1" are displayed next in the setting menu screen. The virtual mobility A1, the virtual mobility A2, and the virtual mobility B1 are virtual mobilities that are classified into CONV among the selectable virtual mobilities. Similarly, when the option "HEV" is selected, an option "virtual mobility C1" and an option "virtual mobility C2" are displayed next in the setting menu screen. The virtual mobility C1 and the virtual mobility C2 are virtual mobilities that are classified into HEV among the selectable virtual mobilities. When one of these options is selected, the HMI 20 determines the selected virtual mobility to be the target virtual mobility. For example, when the option "virtual mobility A2" is selected, the HMI 20 determines the virtual mobility A2 to be the target virtual mobility. Thus, the HMI 20 receives an input of selection of a target virtual mobility from the driver.

The categories of the virtual mobilities in the above description are one example, and the options relating to the categories may be changed as appropriate. For example, options relating to the categories may further include options indicating a plug-in hybrid electric vehicle (PHEV) and a fuel cell electric vehicle (FCEV). Moreover, for example, options relating to the categories may be options indicating other categories, such as a category relating to the type of drive source installed (e.g.: a supercharged straight-four engine, a flat-six engine, a V12 engine, a battery, or a fuel cell). Alternatively, when the option "on-demand mode" is selected, the setting menu screen may display options relating to a virtual mobility, without displaying options relating to categories.

Regarding each option, the name displayed in the setting menu screen may be given as appropriate in consideration of the driver's ease of understanding. For example, the name displayed for an option relating to a virtual mobility may be a concrete name like a vehicle type or a product name such that the driver can easily imagine that virtual mobility.

As has been described above, the driver can select a control mode by operating the HMI 20. The control device 101 controls the battery electric vehicle 100 according to the selected control mode.

The control device 101 according to this embodiment functions as a drive control device that performs drive control of the battery electric vehicle 100 through control of the output of the electric motor 2 and the gear stage of the transmission 18 according to the driver's driving operation. Specifically, the control device 101 functions as the drive control device as the processor 102 executes the computer program 104 for drive control that is stored in the storage device 103. In the following, control of the battery electric vehicle 100 by the drive control device will be described.

4 Drive Control Device

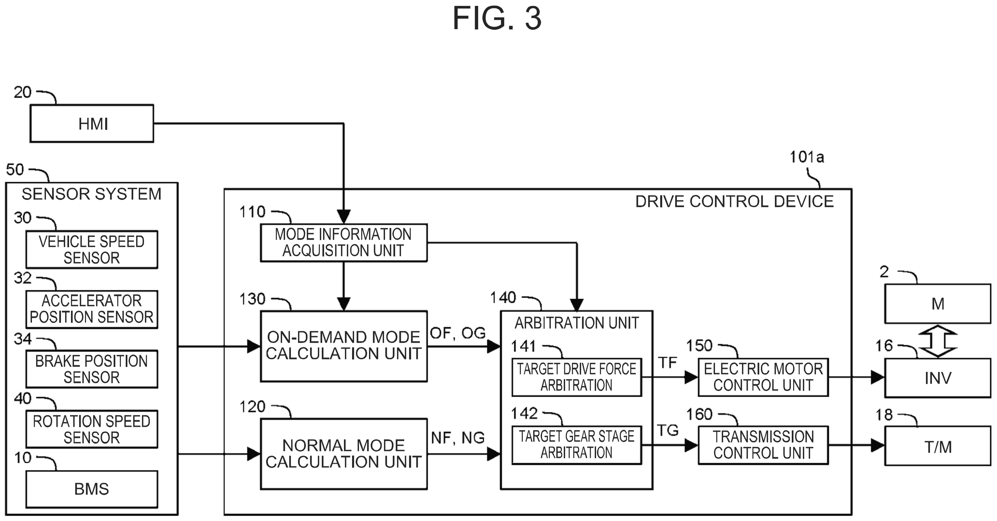

FIG. 3 is a view showing one example of a functional configuration of a drive control device 101a. The drive control device 101a calculates a target drive force TF and a target gear stage TG of the battery electric vehicle 100 according to the driver's driving operation. Then, the drive control device 101a controls the electric motor 2 and the transmission 18 so as to realize the calculated target drive force TF and target gear stage TG.

Signals from the HMI 20 and the sensor system 50 are input into the drive control device 101a. The sensor system 50 includes the vehicle speed sensor 30, the accelerator position sensor 32, the brake position sensor 34, the rotation speed sensor 40, and the battery management system 10. The sensor system 50 may further include a steering angle sensor for detecting a steering angle of the steering wheel, a yaw rate sensor for detecting a yaw rate of the battery electric vehicle 100, an inertial measurement unit (IMU) for detecting a posture of the battery electric vehicle 100, a sensor for detecting a surrounding environment of the battery electric vehicle 100 (e.g.: a camera, a radar, or an LiDAR), etc.

The signals input from the HMI 20 into the drive control device 101a include a signal indicating a control mode selected by the driver and a signal indicating a target virtual mobility selected by the driver. The signals input from the sensor system 50 into the drive control device 101a include a signal indicating the vehicle speed of the battery electric vehicle 100, a signal indicating the operated state of the accelerator pedal 22, a signal indicating the operated state of the brake pedal 24, a signal indicating the rotation speed of the electric motor 2, and a signal indicating the state of charge (SOC) of the battery 14.

The drive control device 101a includes, as functional blocks, a mode information acquisition unit 110, a normal mode calculation unit 120, an on-demand mode calculation unit 130, an arbitration unit 140, an electric motor control unit 150, and a transmission control unit 160. These functional blocks are realized through cooperation between the processor 102 executing the computer program 104 and the storage device 103.

The mode information acquisition unit 110 receives a signal from the HMI 20 and acquires information about which one of the normal mode and the on-demand mode has been selected. The mode information acquisition unit 110 acquires information on a target virtual mobility selected from a plurality of virtual mobilities. The mode information acquisition unit 110 transmits information on the selected control mode to the arbitration unit 140. The mode information acquisition unit 110 transmits information on the selected target virtual mobility to the on-demand mode calculation unit 130.

The normal mode calculation unit 120 calculates a target drive force NF for the normal mode (hereinafter referred to as the "normal target drive force NF") and a target gear stage NG for the normal mode (hereinafter referred to as the "normal target gear stage NG") based on signals from the sensor system 50. The normal target drive force NF and the normal target gear stage NG are a target drive force and a target gear stage, respectively, for making the battery electric vehicle 100 behave as an ordinary BEV. Details of a process executed by the normal mode calculation unit 120 will be described later. The normal mode calculation unit 120 transmits the calculated normal target drive force NF and normal target gear stage NG to the arbitration unit 140.

The on-demand mode calculation unit 130 acquires information on the target virtual mobility from the mode information acquisition unit 110. The on-demand mode calculation unit 130 calculates a target drive force OF for the on-demand mode (hereinafter referred to as the "on-demand target drive force OF") and a target gear stage OG for the on-demand mode (hereinafter referred to as the "on-demand target gear stage OG") based on signals from the sensor system 50. The on-demand target drive force OF is a target drive force for reproducing, in the battery electric vehicle 100, the acceleration property of a virtual mobility in response to the driver's driving operation. Details of a process executed by the on-demand mode calculation unit 130 will be described later. The on-demand mode calculation unit 130 outputs the calculated on-demand target drive force OF and on-demand target gear stage OG to the arbitration unit 140.

The arbitration unit 140 arbitrates the target drive force TF used for control of the electric motor 2 and the target gear stage TG used for control of the transmission 18 according to the selected control mode. The arbitration unit 140 executes a process 141 of performing arbitration of the target drive force TF and a process 142 of performing arbitration of the target gear stage TG.

In the process 141, while the on-demand mode is selected, the arbitration unit 140 transmits the on-demand target drive force OF calculated by the on-demand mode calculation unit 130 to the electric motor control unit 150. While the normal mode is selected, the arbitration unit 140 transmits the normal target drive force NF calculated by the normal mode calculation unit 120 to the electric motor control unit 150. In the process 141, when the control mode is switched, the arbitration unit 140 may gradually change the target drive force TF to be transmitted to the electric motor control unit 150. For example, when the control mode is switched from the normal mode to the on-demand mode, the arbitration unit 140 may set, as the target drive force TF, a value by which the normal target drive force NF is gradually changed to the on-demand target drive force OF over a certain switching period.

In the process 142, while the on-demand mode is selected, the arbitration unit 140 transmits the on-demand target gear stage OG calculated by the on-demand mode calculation unit 130 to the transmission control unit 160. While the normal mode is selected, the arbitration unit 140 transmits the normal target gear stage NG calculated by the normal mode calculation unit 120 to the transmission control unit 160.

The drive control device 101a may be configured not to execute the process involved with the normal mode calculation unit 120 while the on-demand mode is selected. Similarly, the drive control device 101a may be configured not to execute the process involved with the on-demand mode calculation unit 130 while the normal mode is selected. This configuration can reduce the processing load of the drive control device 101a in each control mode.

The electric motor control unit 150 controls the electric motor 2 so as to realize the target drive force TF transmitted from the arbitration unit 140. More specifically, the electric motor control unit 150 generates a control signal for the inverter 16 according to the target drive force TF. Then, the electric motor control unit 150 changes the motor torque to be output by the electric motor 2 through PWM control by the inverter 16.

The transmission control unit 160 controls the transmission 18 so as to realize the target gear stage TG transmitted from the arbitration unit 140. More specifically, the transmission control unit 160 generates a control signal for the transmission 18 according to the target gear stage TG. The transmission 18 changes the gear stage in accordance with the control signal from the transmission control unit 160.

Thus, the drive control device 101a calculates the target drive force TF and the target gear stage TG of the battery electric vehicle 100 according to the control mode, and controls the electric motor 2 and the transmission 18 so as to realize the calculated target drive force TF and target gear stage TG. In particular, while the on-demand mode is selected, the drive control device 101a controls the electric motor 2 so as to reproduce the acceleration property of the target virtual mobility in the battery electric vehicle 100. On the other hand, the acceleration property of the battery electric vehicle 100 while the normal mode is selected is the acceleration property of an ordinary BEV.

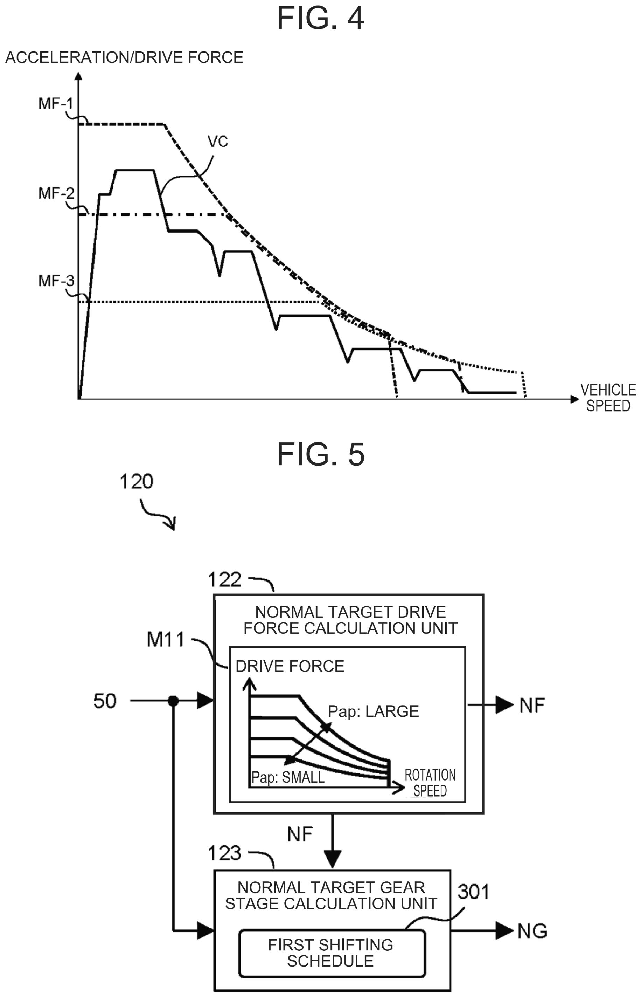

FIG. 4 is a view showing one example of an acceleration property VC of a target virtual mobility reproduced in the battery electric vehicle 100. FIG. 4 also shows, for comparison, one example of an output property MF indicating an acceleration (drive force) that the battery electric vehicle 100 can output. The output property MF changes according to the gear stage of the transmission 18. Specifically, as the gear ratio of the transmission 18 becomes higher, a maximum acceleration (drive force) of the battery electric vehicle 100 becomes higher. On the other hand, as the gear ratio of the transmission 18 becomes higher, a highest vehicle speed of the battery electric vehicle 100 becomes lower. For a case where the transmission 18 has three gear stages (1st, 2nd, 3rd), FIG. 4 shows three output properties MF-1 (broken line), MF-2 (long dashed short dashed line), and MF-3 (dotted line) for the respective gear stages. The gear ratio of the gear stage becomes higher in the order of the output properties MF-1, MF-2, and MF-3. That is, the output properties MF-1, MF-2, and MF-3 are output properties MF when the gear stage of the transmission 18 is 1st, 2nd, and 3rd, respectively. Each output property MF can be considered also as an acceleration property of the battery electric vehicle 100 while the normal mode is selected.

The acceleration property of the battery electric vehicle 100 while the on-demand mode is selected reproduces the acceleration property VC of the target virtual mobility. Therefore, the acceleration property of the battery electric vehicle 100 while the on-demand mode is selected changes in various patterns according to the target virtual mobility as the target virtual mobility is changed. As a result, in the on-demand mode, the driver can enjoy the acceleration sensations of various virtual mobilities in the battery electric vehicle 100.

In the following, processes executed by the normal mode calculation unit 120 and the on-demand mode calculation unit 130 will be described in detail.

4.1 Normal Mode Calculation Unit

FIG. 5 is a view showing one example of a functional configuration of the normal mode calculation unit 120. The normal mode calculation unit 120 calculates the normal target drive force NF and the normal target gear stage NG. The normal mode calculation unit 120 includes, as functional blocks, a normal target drive force calculation unit 122 and a normal target gear stage calculation unit 123.

The normal target drive force calculation unit 122 calculates the normal target drive force NF using a map M11 based on signals from the sensor system 50. Using the operated state of a driving operation member and the travel state of the battery electric vehicle 100 as parameters, the map M11 gives the normal target drive force NF. For example, using the accelerator operation amount of the accelerator pedal 22 and the rotation speed of the electric motor 2 as parameters, the map M11 gives the normal target drive force NF. Further, the map M11 may be configured to give the normal target drive force NF using the brake operation amount of the brake pedal 24 or the SOC of the battery 14 as parameters. In this embodiment, the process involved with the normal target drive force calculation unit 122 may be changed as appropriate. For the process involved with the normal target drive force calculation unit 122, a commonly known suitable technique that is used to calculate a target drive force in a conventional ordinary BEV can be adopted. The normal mode calculation unit 120 transmits the normal target drive force NF calculated by the normal target drive force calculation unit 122.

The normal target gear stage calculation unit 123 acquires various signals from the sensor system 50. Further, the normal target gear stage calculation unit 123 acquires the normal target drive force NF calculated by the normal target drive force calculation unit 122. Then, the normal target gear stage calculation unit 123 calculates the normal target gear stage NG in accordance with a first shifting schedule 301. The first shifting schedule 301 is a shifting schedule that specifies a gear shifting timing in the normal mode (when the control mode is not the on-demand mode), and may be stored beforehand in the storage device 103 as the data 105. The shifting schedule determines a range of use of each gear stage within a range of acceleration (drive force) that the battery electric vehicle 100 can realize with respect to a current vehicle speed and a target drive force of the battery electric vehicle 100. The shifting schedule may be given in the form of a gear shifting diagram. The first shifting schedule 301 is configured as appropriate with the fuel efficiency, the maintenance performance, etc., of the battery electric vehicle 100 taken into account.

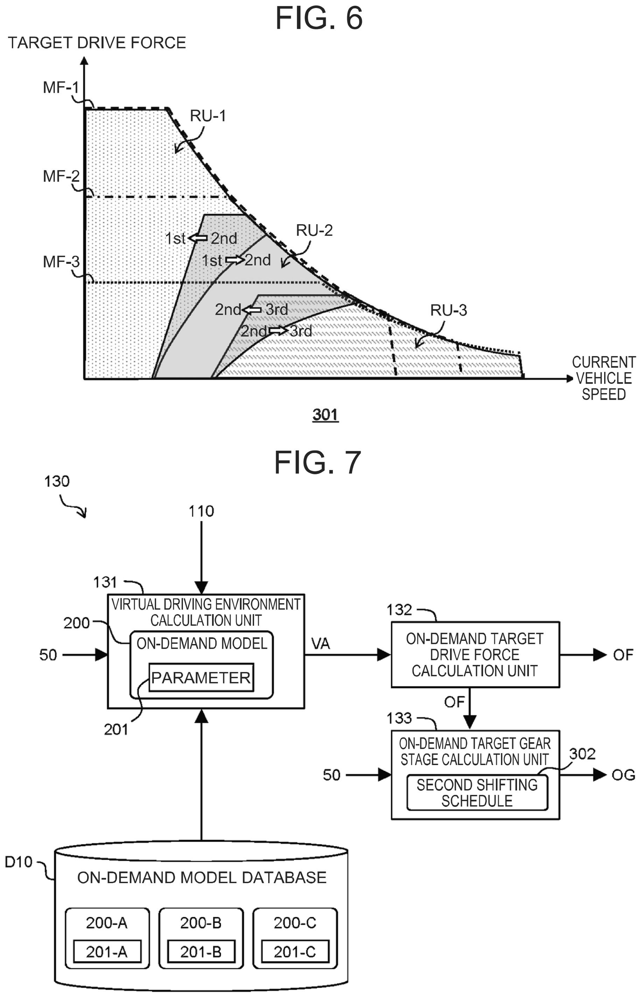

FIG. 6 is a view showing one example of the first shifting schedule 301. FIG. 6 shows one example of the first shifting schedule 301 for the case where the transmission 18 has three gear stages (1st, 2nd, 3rd) as in the case shown in FIG. 4. FIG. 6 shows a range of use RU of each gear stage that is determined by the first shifting schedule 301. A range of use RU-1 is the range of use RU of the gear stage 1st. A range of use RU-2 is the range of use RU of the gear stage 2nd. A range of use RU-3 is the range of use RU of the gear stage 3rd. As shown in FIG. 6, the gear stage to be used with respect to the current vehicle speed and the target drive force of the battery electric vehicle 100 can be identified based on the range of use RU determined by the first shifting schedule 301. In particular, a point when crossing the range of use RU is the gear shifting timing.

In accordance with the first shifting schedule 301 as shown in FIG. 6, the normal target gear stage calculation unit 123 calculates, as the normal target gear stage NG, a gear stage identified from the current vehicle speed and the normal target drive force NF of the battery electric vehicle 100. The normal mode calculation unit 120 outputs the normal target gear stage NG calculated by the normal target gear stage calculation unit 123.

As has been described above, the normal mode calculation unit 120 calculates the normal target drive force NF and the normal target gear stage NG. Next, a process executed by the on-demand mode calculation unit 130 will be described.

4.2 On-Demand Mode Calculation Unit

FIG. 7 is a view showing one example of a functional configuration of the on-demand mode calculation unit 130. The on-demand mode calculation unit 130 calculates the on-demand target drive force OF and the on-demand target gear stage OG. The on-demand mode calculation unit 130 includes, as functional blocks, a virtual driving environment calculation unit 131, an on-demand target drive force calculation unit 132, and an on-demand target gear stage calculation unit 133. The on-demand mode calculation unit 130 is configured to be able to access an on-demand model database D10.

The on-demand model database D10 is a database that manages a plurality of on-demand models 200 modeled after a plurality of virtual mobilities. The on-demand model database D10 may be stored in the storage device 103 as the data 105. Each on-demand model 200 managed by the on-demand model database D10 may be updated as needed. A new on-demand model 200 may be downloaded to the on-demand model database D10 as needed. The on-demand model database D10 may be stored in a server or the like located outside the vehicle. In this case, when using each on-demand model 200 in the on-demand model database D10, an on-board device and the server located outside the vehicle may perform communication to acquire (download) the required on-demand model 200. In the example shown in FIG. 7, the on-demand model database D10 manages three on-demand models 200-A, 200-B, 200-C. Each on-demand model 200 is a model that simulates the driving environment of a virtual mobility in response to the driver's driving operation using, as inputs, the operated state of a driving operation member and the travel state of the battery electric vehicle 100. In particular, each on-demand model 200 is configured to be able to simulate the acceleration property of a virtual mobility. That is, each on-demand model 200 is configured to be able to simulate at least a drive force given to the virtual mobility in response to the driver's driving operation and acceleration-deceleration behavior of the virtual mobility under the action of that drive force. A simulation result of the acceleration-deceleration behavior of the virtual mobility obtained by each on-demand model 200 includes a virtual acceleration VA of the virtual mobility.

Typically, each on-demand model 200 includes a control model that simulates a control system relating to a powertrain of the virtual mobility, and a plant model that simulates the acceleration-deceleration behavior of the virtual mobility according to a control signal from the control model. In this case, the plant model includes a model of the powertrain that behaves based on the control signal from the control model and a model for simulating the behavior of the virtual mobility under the action of the virtual drive force of the powertrain model. One example of the configuration of the on-demand model 200 will be described later.

Each on-demand model 200 has a parameter 201 relating to the behavior of the virtual mobility in the simulation. Examples of the parameter 201 include a weight, a wheel diameter, a gear ratio, drive source maximum torque, drive torque responsivity, and a shifting schedule. The contents of the parameter 201 may differ from one on-demand model 200 to another. The on-demand model 200 represents a model of one virtual mobility by being combined with a set value of the parameter 201. For example, as shown in the table below, each virtual mobility represents a model of one virtual mobility by a combination of the on-demand model 200 and the set value of the parameter 201. As shown in the table below, the same on-demand model 200 may correspond to different virtual mobilities. One example of such a case is where the powertrain systems are of the same type and each virtual mobility can be represented by changing the set value of the parameter 201.

Table 1

| Virtual mobility | On-demand model | Parameter |
|---|---|---|
| Virtual mobility A1 | 200-A | Set value A1 |
| Virtual mobility A2 | 200-A | Set value A2 |
| Virtual mobility B1 | 200-B | Set value B1 |
| Virtual mobility C1 | 200-C | Set value C1 |
| Virtual mobility C2 | 200-C | Set value C2 |

The virtual driving environment calculation unit 131 acquires information on the target virtual mobility from the mode information acquisition unit 110. Based on the acquired information, the virtual driving environment calculation unit 131 retrieves the on-demand model 200 (target on-demand model) corresponding to the target virtual mobility with reference to the on-demand model database D10. Further, the virtual driving environment calculation unit 131 sets the parameter 201 of the retrieved on-demand model 200 according to the target virtual mobility. For example, when the target virtual mobility is "virtual mobility B1" in the above table, the virtual driving environment calculation unit 131 retrieves the on-demand model 200-B with reference to the on-demand model database D10. Then, the virtual driving environment calculation unit 131 sets the parameter 201-B of the on-demand model 200-B to the set value B1.

Using the retrieved target on-demand model, the virtual driving environment calculation unit 131 simulates the virtual driving environment of the target virtual mobility in response to the driver's driving operation. More specifically, the virtual driving environment calculation unit 131 receives signals from the sensor system 50 and acquires information on the operated state of a driving operation member and information on the travel state of the battery electric vehicle 100, which are to be input into the target on-demand model. For example, the virtual driving environment calculation unit 131 acquires the accelerator operation amount of the accelerator pedal 22 and the vehicle speed of the battery electric vehicle 100. In addition, depending on the configuration of the target on-demand model, the virtual driving environment calculation unit 131 may acquire information on the accelerator operation speed of the accelerator pedal 22, the brake operation amount and the brake operation speed of the brake pedal 24, the steering angle of the steering wheel, the yaw rate of the battery electric vehicle 100, etc. Then, the virtual driving environment calculation unit 131 simulates the virtual driving environment of the target virtual mobility by inputting the acquired information into the target on-demand model. In particular, the virtual driving environment calculation unit 131 calculates the virtual acceleration VA of the target virtual mobility in response to the driver's driving operation through simulation of the virtual driving environment of the target virtual mobility. The virtual driving environment calculation unit 131 transmits the calculated virtual acceleration VA to the on-demand target drive force calculation unit 132.

Upon acquiring the virtual acceleration VA, the on-demand target drive force calculation unit 132 calculates a drive force for adapting the acceleration of the battery electric vehicle 100 to the virtual acceleration VA as the on-demand target drive force OF. For example, as shown in the following expression, the on-demand target drive force calculation unit 132 converts the virtual acceleration VA into the on-demand target drive force OF using a simple inverse model of the battery electric vehicle 100. In the following expression, m is the vehicle weight of the battery electric vehicle 100, and $F_{load}$ is actual travel resistance acting on the battery electric vehicle 100. The on-demand mode calculation unit 130 outputs the on-demand target drive force OF calculated by the on-demand target drive force calculation unit 132.

Expression 1

$$OF = m * VA - F_{load}$$

The on-demand target gear stage calculation unit 133 acquires various signals from the sensor system 50. The on-demand target gear stage calculation unit 133 acquires the on-demand target drive force OF calculated by the on-demand target drive force calculation unit 132. Then, the on-demand target gear stage calculation unit 133 calculates the on-demand target gear stage OG based on the acquired information.

Here, it is also conceivable to configure the on-demand target gear stage calculation unit 133 so as to calculate the on-demand target gear stage OG in accordance with the same first shifting schedule 301 as in the normal mode. However, if the on-demand target gear stage OG is calculated in accordance with the first shifting schedule 301, depending on the driver's driving operation, downshifting of the gear stage that does not appear in the behavior of the target virtual mobility may occur. As a result, the reproducibility of the acceleration property VC of the target virtual mobility may be impaired.

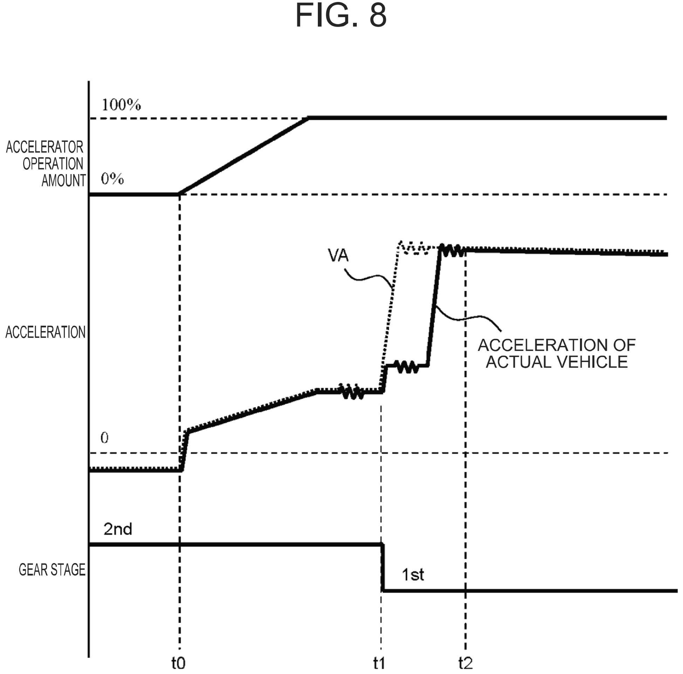

FIG. 8 is a view showing one example of cases where the reproducibility of the acceleration property of the target virtual mobility is impaired due to occurrence of downshifting of the gear stage. FIG. 8 shows changes over time in the accelerator operation amount, the virtual acceleration VA of the target virtual mobility (dotted line), the acceleration of the battery electric vehicle 100 (solid line), and the gear stage. In the example shown in FIG. 8, at time t0, the driver performs kickdown of the accelerator pedal 22. Accordingly, the virtual acceleration VA increases sharply from time t1. As the virtual acceleration VA thus increases, downshifting of the gear stage from 2nd to 1st occurs at time t1. Due to this downshifting, the acceleration of the battery electric vehicle 100 plateaus, resulting in discrepancy between the acceleration of the battery electric vehicle 100 and the virtual acceleration VA between time t1 and time t2. Thus, when downshifting of the gear stage occurs, the reproducibility of the acceleration property of the target virtual mobility may be impaired.

In this embodiment, therefore, the on-demand target gear stage calculation unit 133 is configured to calculate the on-demand target gear stage OG in accordance with a second shifting schedule 302 that is different from the first shifting schedule 301. The second shifting schedule 302 is a shifting schedule that specifies a gear shifting timing in the on-demand mode, and may be stored beforehand in the storage device 103 as the data 105. In particular, the second shifting schedule 302 is configured such that a change to the gear stage on the high speed side is restricted compared with the first shifting schedule 301. Specifically, the second shifting schedule 302 can be configured as follows.

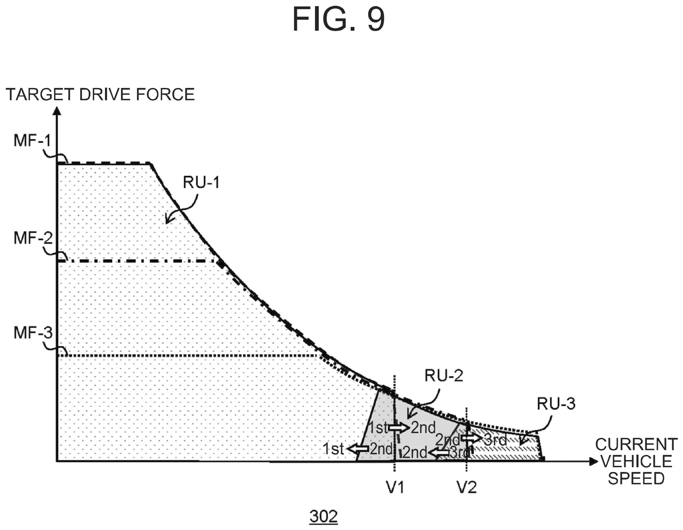

A first specific example is to configure the second shifting schedule 302 such that a change to the gear stage on the high speed side is not performed as long as the battery electric vehicle 100 can maintain a maximum value of the drive force that the battery electric vehicle 100 can output at a current vehicle speed thereof. FIG. 9 is a view showing one example of a second specific example of the second shifting schedule 302. FIG. 9 shows a case where the transmission 18 has three gear stages (1st, 2nd, 3rd) as with the first shifting schedule 301 shown in FIG. 6. In the example shown in FIG. 9, the range of use RU-1 spreads to a vehicle speed V1 at which the maximum value of the drive force can be maintained in the gear stage 1st. Similarly, the range of use RU-2 spreads to a vehicle speed V2 at which the maximum value of the drive force can be maintained in the gear stage 2nd. It can be seen that in the second shifting schedule 302 shown in FIG. 9, a change to the gear stage on the high speed side is restricted compared with the first shifting schedule 301 shown in FIG. 6.

A second specific example is to configure the second shifting schedule 302 such that the gear stage is set to a gear stage with the highest gear ratio regardless of the operated state of a driving operation member and the travel state of the battery electric vehicle 100. That is, in the second specific example, the gear stage of the transmission 18 is fixed in the gear stage with the highest gear ratio. For example, when the transmission 18 has three gear stages (1st, 2nd, 3rd) as shown in FIG. 4, the gear stage is fixed in 1st. Thus configuring the second shifting schedule 302 can also inhibit a change to the gear stage on the high speed side.

In the on-demand mode, a change to the gear stage on the high speed side is restricted as the on-demand target gear stage OG is calculated in accordance with the second shifting schedule 302 different from the first shifting schedule 301. This can reduce the likelihood that downshifting of the gear stage that does not appear in the behavior of the target virtual mobility may occur due to the driver's driving operation. As a result, the reproducibility of the acceleration property of the target virtual mobility can be improved.

The on-demand target gear stage calculation unit 133 calculates, as the on-demand target gear stage OG, a gear stage that is identified from the current vehicle speed of the battery electric vehicle 100 and the on-demand target drive force OF in accordance with the second shifting schedule 302 as shown in FIG. 9. The on-demand mode calculation unit 130 outputs the on-demand target gear stage OG calculated by the on-demand target gear stage calculation unit 133.

As has been described above, the on-demand mode calculation unit 130 calculates the on-demand target drive force OF and the on-demand target gear stage OG.

4.2.1 Example of Configuration of On-Demand Model

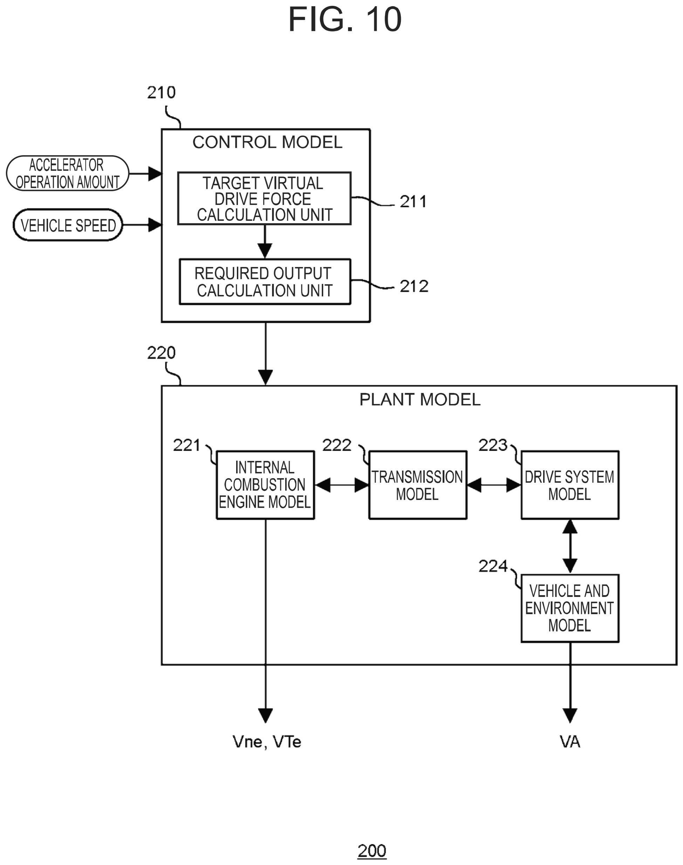

In the following, one example of a configuration of the on-demand model 200 managed by the on-demand model database D10 will be described. FIG. 10 is a view showing one example of the configuration of the on-demand model 200. The on-demand model 200 includes a control model 210 and a plant model 220. The control model 210 simulates a control system relating to the powertrain of the virtual mobility. The plant model 220 simulates the acceleration-deceleration behavior of the virtual mobility according to a control signal from the control model 210. The plant model 220 includes a model of the powertrain that behaves based on the control signal from the control model 210 and a model for simulating the behavior of the virtual mobility under the action of the virtual drive force of the powertrain model. It can also be said that the control model 210 simulates a control system that calculates a required output for the powertrain of the virtual mobility. Further, it can also be said that the plant model 220 simulates a physical restriction on the required output of the powertrain.

The specifications of each of the control model 210 and the plant model 220 may differ according to the type of the powertrain system. For example, the configurations of a control system, a transmission, and a drive system differ between a CONV and an HEV. Therefore, the on-demand model 200 of a CONV and the on-demand model 200 of an HEV are different from each other in the specifications of both the control model 210 and the plant model 220. In the example shown in FIG. 10, a case is shown in which the virtual mobility is particularly an automatic transmission vehicle (AT vehicle) equipped with an internal combustion engine.

The control model 210 includes a target virtual drive force calculation unit 211 and a required output calculation unit 212. Based on the accelerator operation amount and the vehicle speed, the target virtual drive force calculation unit 211 calculates a virtual drive force (target virtual drive force) required of the powertrain of the virtual mobility. For example, the target virtual drive force calculation unit 211 performs the calculation by using a map that gives a target virtual drive force with respect to a combination of an accelerator operation amount and a vehicle speed. The required output calculation unit 212 calculates a required output of the powertrain such that the calculated target virtual drive force can be satisfied. The calculated required output includes target engine torque of the internal combustion engine and a target gear stage of the transmission. The control model 210 transmits the calculated required output to the plant model 220.

The plant model 220 includes an internal combustion engine model 221, a transmission model 222, a drive system model 223, and a vehicle and environment model 224. The internal combustion engine model 221, the transmission model 222, and the drive system model 223 are models of the powertrain from the drive source to the drive wheels. The vehicle and environment model 224 is a model for simulating the behavior of the virtual mobility under the action of the virtual drive force of the powertrain model.

The internal combustion engine model 221 is a model of the internal combustion engine of the virtual mobility. For example, the internal combustion engine model 221 simulates the behavior of the internal combustion engine in response to an input of the target engine torque. The internal combustion engine model 221 outputs a virtual engine rotation speed VNe and virtual engine torque VTe. Examples of the parameter 201 that can be changed according to the target virtual mobility in the internal combustion engine model 221 include engine maximum torque and engine torque responsivity.

The transmission model 222 is a model of the transmission of the virtual mobility. For example, the transmission model 222 simulates the behavior of the transmission in response to an input of the target gear stage. The transmission model 222 outputs virtual transmission output torque based on the gear ratio that is determined by the virtual engine torque VTe output by the internal combustion engine model 221 and the virtual gear stage. The transmission model 222 includes a stepped transmission model simulating a stepped transmission and a continuously variable transmission model simulating a continuously variable transmission. Either the stepped transmission model or the continuously variable transmission model is selected according to the target virtual mobility. Examples of the parameter 201 that can be changed in the transmission model 222 according to the target virtual mobility include the gear ratio and the shifting schedule. In the case of the stepped transmission model, the gear ratio means a gear ratio of each gear stage.

The drive system model 223 is a model of the drive system of the virtual mobility. For example, in the drive system model 223, a mechanical structure from the transmission to the drive wheels is modeled. The drive system model 223 calculates drive wheel torque using the virtual transmission output torque output by the transmission model 222 and a predetermined speed reduction ratio, and outputs the virtual drive force of the virtual mobility. Examples of the parameter 201 that can be changed in the drive system model 223 according to the target virtual mobility include the speed reduction ratio and propeller shaft maximum allowable torque.

The vehicle and environment model 224 is a model representing dynamic properties of the virtual mobility and a travel environment of the vehicle mobility. The vehicle and environment model 224 calculates travel resistance acting on the virtual mobility based on the travel environment of the virtual mobility. Then, the vehicle and environment model 224 simulates the acceleration-deceleration behavior of the virtual mobility based on the virtual drive force output from the drive system model 223, the calculated travel resistance, and the dynamic properties of the virtual mobility. The vehicle and environment model 224 outputs the virtual acceleration VA based on the acceleration-deceleration behavior of the virtual mobility. Examples of the parameter 201 that can be changed in the vehicle and environment model 224 according to the target virtual mobility include the weight, the wheel diameter, and the CD value.

The on-demand model 200 can be configured as has been described above. The on-demand model 200 shown in FIG. 10 is one example. It is also possible to configure part of the on-demand model 200 more finely according to a phenomenon that is desired to be emphasized. For example, a case will be considered where shock or response accompanying switching of engagement of gears of the transmission and the clutch upon kickdown is desired to be emphasized. In this case, the transmission model 222 may be configured to finely reproduce a gear mechanism, such as a planetary or Ravigneaux type, of the transmission, inertia of each constituent element, changes in a transmission path between when the clutch is engaged and when it is disengaged, etc. On the other hand, when the calculation load in the on-demand model 200 is desired to be reduced, the transmission model 222 may be simply configured to reproduce only the gear ratio.

4.3 Processing Flow

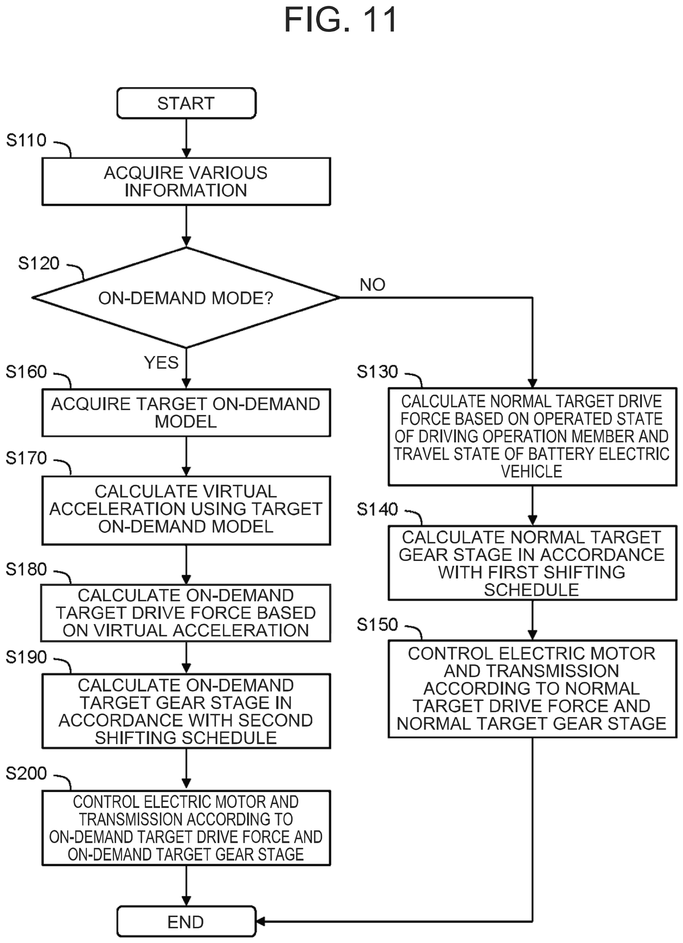

FIG. 11 is a flowchart showing a processing flow of a process that is executed by the drive control device 101a (more specifically, the processor 102) based on the above-described functional configuration. The processing flow shown in FIG. 11 is repeatedly executed on a predetermined processing cycle.

In step S110, the drive control device 101a acquires various information. For example, the drive control device 101a acquires information on a target virtual mobility from the mode information acquisition unit 110. The drive control device 101a acquires information on the operated state of a driving operation member and the travel state of the battery electric vehicle 100 from the sensor system 50.

Next, in step S120, the drive control device 101a determines whether the control mode of the battery electric vehicle 100 is the on-demand mode. When the battery electric vehicle 100 is not in the on-demand mode (step S120: No), the process proceeds to step S130. When the battery electric vehicle 100 is in the on-demand mode (step S120: Yes), the process proceeds to step S160.

In step S130 (normal mode), the drive control device 101a calculates the normal target drive force NF based on the operated state of the driving operation member and the travel state of the battery electric vehicle 100. Next, in step S140, the drive control device 101a calculates the normal target gear stage NG in accordance with the first shifting schedule 301. Then, in step S150, the drive control device 101a controls the output of the electric motor 2 and the gear stage of the transmission 18 according to the normal target drive force NF and the normal target gear stage NG.

In step S160 (on-demand mode), the drive control device 101a retrieves the on-demand model 200 (target on-demand model) corresponding to the target virtual mobility with reference to the on-demand model database D10. Next, in step S170, the drive control device 101a calculates, using the target on-demand model, the virtual acceleration VA of the target virtual mobility in response to the driver's driving operation. Next, in step S180, the drive control device 101a calculates the on-demand target drive force OF for adapting the acceleration of the battery electric vehicle 100 to the virtual acceleration VA. Next, in step S190, the drive control device 101a calculates the on-demand target gear stage OG in accordance with the second shifting schedule 302. Then, in step S200, the drive control device 101a controls the output of the electric motor 2 and the gear stage of the transmission 18 according to the on-demand target drive force OF and the on-demand target gear stage OG.

In this way, the drive control device 101a according to this embodiment executes the process. In the above-described processing flow, when the on-demand mode has continued from the preceding processing, the drive control device 101a may use the target on-demand model acquired in the preceding processing and thereby skip the processing involved with step S160.

As has been described above, in this embodiment, the on-demand target gear stage OG is calculated in accordance with the second shifting schedule 302 in the on-demand mode. Here, the second shifting schedule 302 is configured such that a change to the gear stage on the high speed side is restricted compared with the first shifting schedule 301 in the normal mode. This can reduce the likelihood that downshifting of the gear stage that does not appear in the behavior of the target virtual mobility may occur due to the driver's driving operation. As a result, the reproducibility of the acceleration property of the target virtual mobility in the on-demand mode can be improved.

4.4 Modified Example of On-Demand Mode Calculation Unit

For the on-demand mode calculation unit 130, a modified example to be described below may be adopted. In the following description, contents that overlap those described above will be omitted as appropriate.

In the above description, the on-demand target gear stage calculation unit 133 in the on-demand mode calculation unit 130 is configured to calculate the on-demand target gear stage OG in accordance with the second shifting schedule 302. As mentioned above, this configuration can improve the reproducibility of the acceleration property of the target virtual mobility in the on-demand mode. On the other hand, it is considered that the second shifting schedule 302 is inferior to the first shifting schedule 301 in terms of the fuel efficiency and the maintenance performance. Therefore, the on-demand target gear stage calculation unit 133 may be configured to calculate the on-demand target gear stage OG in accordance with the first shifting schedule 301 instead of the second shifting schedule 302 under a predetermined condition.

As the predetermined condition for calculating the on-demand target gear stage OG in accordance with the first shifting schedule 301, the following (1) to (3) are conceivable:

(1) When the battery electric vehicle 100 is in a situation that requires prioritizing the fuel efficiency (hereinafter referred to as the "fuel efficiency-prioritized situation")
(2) When the battery electric vehicle 100 is in a situation that requires executing high-speed travel (hereinafter referred to as the "high-speed travel executing situation")
(3) When the target virtual mobility corresponds to any one of one or more specific mobilities.

Calculating the on-demand target gear stage OG in accordance with the first shifting schedule 301 under Condition (1) can increase the fuel efficiency in the on-demand mode. Whether the battery electric vehicle 100 is in the fuel efficiency-prioritized situation can be determined, for example, based on the SOC of the battery 14. In this case, the on-demand target gear stage calculation unit 133 determines that the battery electric vehicle 100 is in the fuel efficiency-prioritized situation when the SOC of the battery 14 is equal to or lower than a predetermined threshold value. Alternatively, the on-demand target gear stage calculation unit 133 may determine whether the battery electric vehicle 100 is in the fuel efficiency-prioritized situation according to an input from the driver. For example, the on-demand target gear stage calculation unit 133 determines that the battery electric vehicle 100 is in the fuel efficiency-prioritized situation while the driver indicates prioritizing fuel efficiency.

Calculating the on-demand target gear stage OG in accordance with the first shifting schedule 301 under Condition (2) can secure the travel performance in high-speed travel in the on-demand mode. Whether the battery electric vehicle 100 is in the high-speed travel executing situation can be determined, for example, based on information on the position of the battery electric vehicle 100. In this case, the on-demand target gear stage calculation unit 133 determines that the battery electric vehicle 100 is in the high-speed travel executing situation when the battery electric vehicle 100 is traveling on an expressway. Alternatively, the on-demand target gear stage calculation unit 133 determines that the battery electric vehicle 100 is in the high-speed travel executing situation when the battery electric vehicle 100 is traveling on a road with a vehicle speed limit equal to or higher than a predetermined speed. Alternatively, the on-demand target gear stage calculation unit 133 may determine whether the battery electric vehicle 100 is in the high-speed travel executing situation according to an input from the driver. For example, the on-demand target gear stage calculation unit 133 determines that the battery electric vehicle 100 is in the high-speed travel executing situation while the driver indicates prioritizing high-speed travel.

Condition (3) assumes a case where the acceleration property VC of the target virtual mobility is similar to a normal acceleration property of the battery electric vehicle 100. That is, the specific mobility is typically a virtual mobility having an acceleration property VC similar to the normal acceleration property of the battery electric vehicle 100. In such a case, even when the on-demand target gear stage OG is calculated in accordance with the first shifting schedule 301, discrepancy from the acceleration property VC of the target virtual mobility is small. Therefore, calculating the on-demand target gear stage OG in accordance with the first shifting schedule 301 under Condition (3) allows the fuel efficiency and the maintenance performance to be prioritized while the reproducibility of the acceleration property of the target virtual mobility is maintained. The one or more specific mobilities may be determined beforehand by the computer program 104.

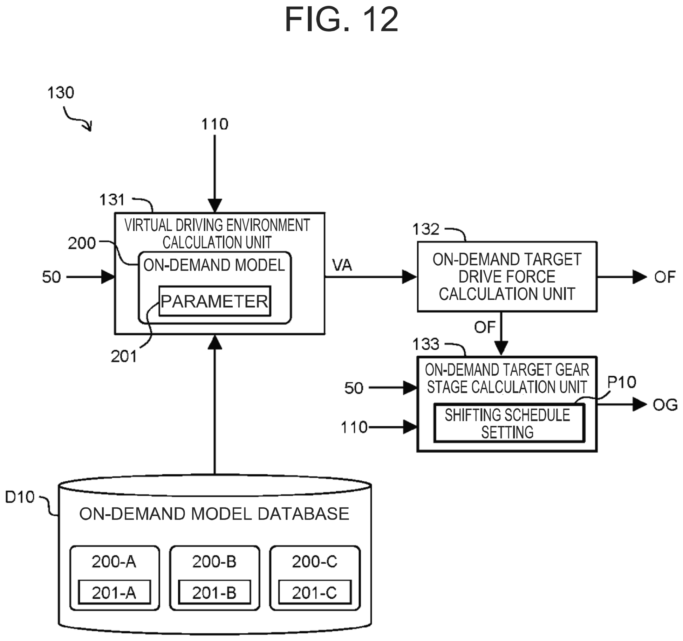

FIG. 12 is a view showing one example of a functional configuration of the on-demand mode calculation unit 130 according to the modified example. Compared with the functional configuration shown in FIG. 7, the functional configuration shown in FIG. 12 is different in the process in the on-demand target gear stage calculation unit 133.

In the modified example, the on-demand target gear stage calculation unit 133 is further configured to acquire information on the target virtual mobility from the mode information acquisition unit 110. Moreover, the on-demand target gear stage calculation unit 133 is configured to execute a process P10 of setting a shifting schedule for calculating the on-demand target gear stage OG. In the process P10, the on-demand target gear stage calculation unit 133 sets the shifting schedule to the first shifting schedule 301 when a predetermined condition (e.g., any one of Conditions (1) to (3) described above) is met. On the other hand, when the predetermined condition is not met, the on-demand target gear stage calculation unit 133 sets the shifting schedule to the second shifting schedule 302. Then, the on-demand target gear stage calculation unit 133 calculates the on-demand target gear stage OG in accordance with the set shifting schedule.

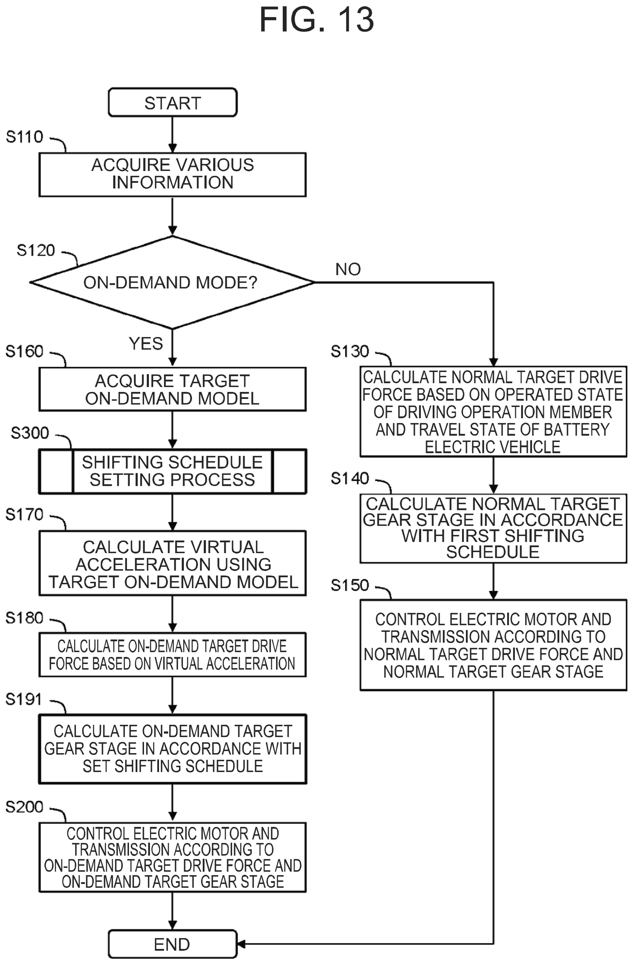

FIG. 13 is a flowchart showing a processing flow of a process that is executed by the drive control device 101a (more specifically, the processor 102) according to the modified example. The processing flow shown in FIG. 13 is repeatedly executed on a predetermined processing cycle.

In the processing flow shown in FIG. 13, compared with the processing flow shown in FIG. 11, the drive control device 101a further executes a shifting schedule setting process (step S300) after step S160 when the control mode is the on-demand mode (step S120: Yes). Then, after step S180, in step S191 instead of step S190, the drive control device 101a calculates the on-demand target gear stage OG in accordance with the set shifting schedule.

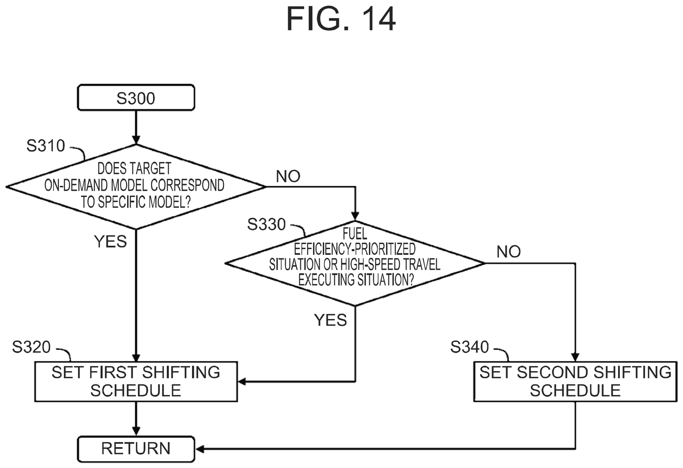

FIG. 14 is a flowchart showing a processing flow of a process that is executed by the drive control device 101a in the process (shifting schedule setting process) involved with step S300 shown in FIG. 13.

In step S310, the drive control device 101a determines whether the target on-demand model corresponds to any one of the one or more specific models. When the target on-demand model corresponds to any one of the one or more specific models (step S310: Yes), the drive control device 101a sets the shifting schedule to the first shifting schedule 301 (step S320). When the target on-demand model corresponds to none of the one or more specific models (step S310: No), the process proceeds to step S330.

In step S330, the drive control device 101a determines whether the battery electric vehicle 100 is in the fuel efficiency-prioritized situation or the high-speed travel executing situation. When the battery electric vehicle 100 is in the fuel efficiency-prioritized situation or the high-speed travel executing situation (step S330: Yes), the drive control device 101a sets the shifting schedule to the first shifting schedule 301 (step S320). When the battery electric vehicle 100 is neither in the fuel efficiency-prioritized situation nor in the high-speed travel executing situation (step S330: No), the drive control device 101a sets the shifting schedule to the second shifting schedule 302.

As has been described above, in the modified example, the on-demand target gear stage calculation unit 133 is configured to calculate the on-demand target gear stage OG in accordance with the first shifting schedule 301 instead of the second shifting schedule 302 under the predetermined condition. This makes it possible to prioritize the fuel efficiency, the maintenance performance, etc., according to the situation of the battery electric vehicle 100 or the target virtual mobility.

5 On-Board Equipment Control Device

The control device 101 according to this embodiment functions as an on-board equipment control device that performs control of the speaker 21 and the instrument 23. Specifically, the control device 101 functions as the on-board equipment control device as the processor 102 executes the computer program 104 for on-board equipment control stored in the storage device 103. In particular, when the battery electric vehicle 100 is in the on-demand mode, the on-board equipment control device controls the speaker 21 and the instrument 23 according to the driving environment of the target virtual mobility. In the following, control of the battery electric vehicle 100 by the on-board equipment control device when the battery electric vehicle 100 is in the on-demand mode will be described.

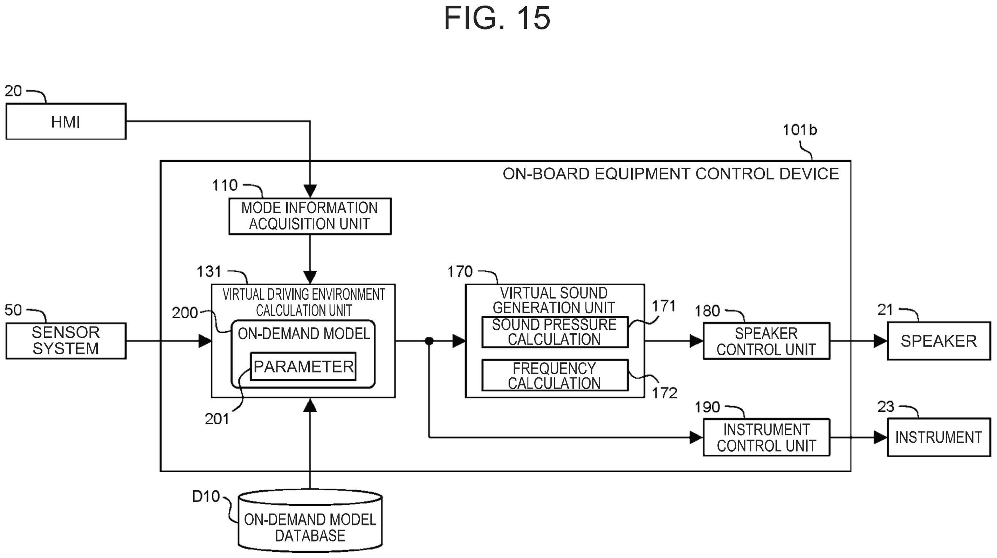

FIG. 15 is a view showing one example of a functional configuration of an on-board equipment control device 101b. When the battery electric vehicle 100 is in the on-demand mode, the on-board equipment control device 101b controls the speaker 21 and the instrument 23 according to the driving environment of the target virtual mobility.

Signals from the HMI 20 and the sensor system 50 are input into the on-board equipment control device 101b. The signals input from the HMI 20 into the on-board equipment control device 101b include a signal indicating a control mode selected by the driver and a signal indicating a target virtual mobility selected by the driver. The signals input from the sensor system 50 into the on-board equipment control device 101b include a signal indicating the vehicle speed of the battery electric vehicle 100, a signal indicating the operated state of the accelerator pedal 22, a signal indicating the operated state of the brake pedal 24, a signal indicating the rotation speed of the electric motor 2, and a signal indicating the state of charge (SOC) of the battery 14.

The on-board equipment control device 101b includes, as functional blocks, a mode information acquisition unit 110, a virtual driving environment calculation unit 131, a virtual sound generation unit 170, a speaker control unit 180, and an instrument control unit 190. These functional blocks are realized through cooperation between the processor 102 executing the computer program 104 and the storage device 103. The mode information acquisition unit 110 may be the same one that has been described with FIG. 3. The virtual driving environment calculation unit 131 may be the same one that has been described with FIG. 7.

The virtual sound generation unit 170 generates a virtual sound that should be audible to the driver in the target virtual mobility in response to the driver's driving operation. For example, when the target virtual mobility is a vehicle equipped with an internal combustion engine (engine vehicle), the virtual sound is an engine sound (pseudo-engine sound) generated by the internal combustion engine of the target virtual mobility. Another example of the virtual sound is a sound of the drive system of the target virtual mobility. The virtual sound generation unit 170 acquires a sound source of the virtual sound relating to the target virtual mobility with reference to the storage device 103. The storage device 103 may store the sound source of the virtual sound relating to each target virtual mobility. The virtual sound generation unit 170 acquires information required to generate the virtual sound from the virtual driving environment calculation unit 131. For example, when the virtual sound is a pseudo-engine sound, the virtual sound generation unit 170 acquires the virtual engine rotation speed VNe and the virtual engine torque VTe from the virtual driving environment calculation unit 131. Then, the virtual sound generation unit 170 generates a virtual sound based on the sound source and the information acquired from the virtual driving environment calculation unit 131.

The virtual sound generation unit 170 executes a process 171 of calculating a sound pressure of the virtual sound and a process 172 of calculating a frequency of the virtual sound. For example, when the virtual sound is a pseudo-engine sound, in the process 171, the sound pressure of the pseudo-engine sound is calculated from the virtual engine torque VTe using a sound pressure map. The sound pressure map is typically created such that the sound pressure becomes higher as the virtual engine torque VTe becomes higher. In the process 172, the frequency of the virtual sound is calculated from the virtual engine rotation speed VNe using a frequency map. The frequency map is typically created such that the frequency becomes higher as the virtual engine rotation speed VNe becomes higher. The virtual sound generation unit 170 transmits the generated sound data of the virtual sound to the speaker control unit 180.

The speaker control unit 180 controls the output of the speaker 21 based on the sound data transmitted from the virtual sound generation unit 170. Thus, the virtual sound is output from the speaker 21.

The instrument control unit 190 controls the instrument 23 so as to display information that should be displayed to the driver in the target virtual mobility (hereinafter referred to as "virtual display information") in response to the driver's driving operation. For example, when the target virtual mobility is an engine vehicle, the virtual display information is the information of the virtual engine rotation speed VNe and the virtual gear stage of the target virtual mobility. The instrument control unit 190 acquires information relating to the virtual display information from the virtual driving environment calculation unit 131. For example, when the target virtual mobility is an engine vehicle, the instrument control unit 190 acquires the virtual engine rotation speed VNe and the virtual gear stage from the virtual driving environment calculation unit 131. Then, the instrument control unit 190 controls the display of the instrument 23 based on the acquired information. Accordingly, the virtual display information is displayed on the instrument 23.

Thus, when the battery electric vehicle 100 is in the on-demand mode, the on-board equipment control device 101b outputs a virtual sound from the speaker 21 and displays the virtual display information on the instrument 23. This can further give the driver realistic sensations as if driving the target virtual mobility.

6 Others

The technical features according to this embodiment are widely applicable not only to BEVs but also to any battery electric vehicles that have an electric motor as a drive source. For example, the technical features according to this embodiment are applicable to HEVs and PHEVs that have a mode of traveling only on a drive force of an electric motor. Further, the technical features according to this embodiment are also applicable to FCEVs that supply electric energy generated by a fuel cell to an electric motor.

**Claims**

1. A battery electric vehicle comprising:

   an electric motor (2) as a drive source;
   a driving operation member (22, 24) configured to be used for driving;
   a transmission (18) configured to transmit an output of the electric motor (2) to a drive wheel of the battery electric vehicle after changing the output depending on a gear stage; and
   one or more processors (102) configured to:

      control the output of the electric motor (2) based on an operated state of the driving operation member (22, 24) and a travel state of the battery electric vehicle;
      communicate with one or more storage devices (103), the one or more storage devices (103) being configured to manage a plurality of on-demand models modeled after a plurality of virtual mobilities different from one another in driving environment properties in response to driving operation of a driver;
      while the battery electric vehicle is not in an on-demand mode, control the gear stage of the transmission (18) in accordance with a first shifting schedule;
      while the battery electric vehicle is in the on-demand mode,

         control the gear stage of the transmission (18) in accordance with a second shifting schedule, the second shifting schedule being configured such that a change to a gear stage on a high speed side is restricted compared with the first shifting schedule,
         acquire, from the one or more storage devices (103), a target on-demand model corresponding to a target virtual mobility selected from the virtual mobilities,
         based on the operated state of the driving operation member (22, 24) and the travel state of the battery electric vehicle, calculate, using the target on-demand model, a virtual acceleration of the target virtual mobility in response to driving operation of the driver, and
         control the output of the electric motor (2) such that an acceleration of the battery electric vehicle becomes the virtual acceleration.

2. The battery electric vehicle according to claim 1, further comprising the one or more storage devices (103).

3. The battery electric vehicle according to claim 1, wherein the second shifting schedule is configured such that a change to the gear stage on the high speed side is not performed as long as the battery electric vehicle is able to maintain a maximum value of a drive force that the battery electric vehicle is able to output at a current vehicle speed of the battery electric vehicle.

4. The battery electric vehicle according to claim 1, wherein the second shifting schedule is configured such that the gear stage is set to a gear stage with a highest gear ratio regardless of the operated state of the driving operation member (22, 24) and the travel state of the battery electric vehicle.

5. The battery electric vehicle according to claim 1, wherein the one or more processors (102) are further configured to, while the battery electric vehicle is in the on-demand mode:

   determine whether the battery electric vehicle is in a fuel efficiency-prioritized situation in which prioritizing fuel efficiency is required; and
   control the gear stage of the transmission (18) in accordance with the first shifting schedule while the battery electric vehicle is in the fuel efficiency-prioritized situation.

6. The battery electric vehicle according to claim 5, wherein the one or more processors (102) are configured to:

while the battery electric vehicle is in the on-demand mode, acquire a state of charge of a battery of the battery electric vehicle; and
while the state of charge of the battery is equal to or lower than a threshold value, determine that the battery electric vehicle is in the fuel efficiency-prioritized situation.

7. The battery electric vehicle according to claim 1, wherein the one or more processors (102) are further configured to, while the battery electric vehicle is in the on-demand mode:

determine whether the battery electric vehicle is in a high-speed travel executing situation in which executing high-speed travel is required; and
control the gear stage of the transmission (18) in accordance with the first shifting schedule while the battery electric vehicle is in the high-speed travel executing situation.

8. The battery electric vehicle according to claim 1, wherein the one or more processors (102) are further configured to, while the battery electric vehicle is in the on-demand mode, control the gear stage of the transmission (18) in accordance with the first shifting schedule instead of the second shifting schedule in a case that the target virtual mobility corresponds to any one of one or more specific mobilities.

9. The battery electric vehicle according to any one of claims 1 to 8, wherein the one or more processors (102) are configured to, while the battery electric vehicle is in the on-demand mode:

calculate a target drive force of the battery electric vehicle for adapting the acceleration of the battery electric vehicle to the virtual acceleration; and
change motor torque output by the electric motor (2) so as to give the target drive force to the battery electric vehicle.

10. The battery electric vehicle according to any one of claims 1 to 8, wherein:

each of the on-demand models has a parameter relating to the driving environment property; and
the one or more processors (102) are configured to, while the battery electric vehicle is in the on-demand mode, set the parameter of the target on-demand model depending on the target virtual mobility.

11. The battery electric vehicle according to any one of claims 1 to 8, further comprising a speaker, wherein the one or more processors (102) are further configured to, while the battery electric vehicle is in the on-demand mode:

based on the operated state of the driving operation member (22, 24) and the travel state of the battery electric vehicle, generate, using the target on-demand model, a virtual sound that is supposed to be audible to the driver in the target virtual mobility in response to driving operation of the driver; and
output the virtual sound from the speaker.

12. The battery electric vehicle according to claim 11, wherein:

the virtual mobilities include an engine vehicle equipped with an internal combustion engine; and
while the target virtual mobility is the engine vehicle, the virtual sound is a pseudo-engine sound that is generated by the internal combustion engine of the target virtual mobility.

13. A control device (101) mounted on the battery electric vehicle according to claim 1.

14. A control method of a battery electric vehicle equipped with:

an electric motor (2) as a drive source;
a driving operation member (22, 24) configured to be used for driving;
a transmission (18) configured to transmit an output of the electric motor (2) to a drive wheel of the battery electric vehicle after changing the output depending on a gear stage; and

a control device (101),

the control method comprising:

controlling the output of the electric motor (2) based on an operated state of the driving operation member (22, 24) and a travel state of the battery electric vehicle;

communicating with one or more storage devices (103), the one or more storage devices (103) being configured to manage a plurality of on-demand models modeled after a plurality of virtual mobilities different from one another in driving environment properties in response to driving operation of a driver;

while the battery electric vehicle is not in an on-demand mode, controlling the gear stage of the transmission (18) in accordance with a first shifting schedule; and

while the battery electric vehicle is in the on-demand mode,

controlling the gear stage of the transmission (18) in accordance with a second shifting schedule, the second shifting schedule being configured such that a change to a gear stage on a high speed side is restricted compared with the first shifting schedule,

acquiring, from the one or more storage devices (103), a target on-demand model corresponding to a target virtual mobility selected from the virtual mobilities,

based on the operated state of the driving operation member (22, 24) and the travel state of the battery electric vehicle, calculating, using the target on-demand model, a virtual acceleration of the target virtual mobility in response to driving operation of the driver, and

controlling the output of the electric motor (2) such that an acceleration of the battery electric vehicle becomes the virtual acceleration.

FIG. 1

EP 4 737 191 A1

# FIG. 2

# FIG. 3

EP 4 737 191 A1

# FIG. 4

# FIG. 5

# FIG. 6

301

# FIG. 7

# FIG. 8

# FIG. 9

302

# FIG. 10

210

CONTROL MODEL

ACCELERATOR OPERATION AMOUNT →

VEHICLE SPEED →

TARGET VIRTUAL DRIVE FORCE CALCULATION UNIT — 211

REQUIRED OUTPUT CALCULATION UNIT — 212

220

PLANT MODEL

221
INTERNAL COMBUSTION ENGINE MODEL

222
TRANSMISSION MODEL

223
DRIVE SYSTEM MODEL

224
VEHICLE AND ENVIRONMENT MODEL

Vne, VTe

VA

200

# FIG. 11

START

S110 ACQUIRE VARIOUS INFORMATION

S120 ON-DEMAND MODE?

NO → S130 CALCULATE NORMAL TARGET DRIVE FORCE BASED ON OPERATED STATE OF DRIVING OPERATION MEMBER AND TRAVEL STATE OF BATTERY ELECTRIC VEHICLE

YES

S160 ACQUIRE TARGET ON-DEMAND MODEL

S170 CALCULATE VIRTUAL ACCELERATION USING TARGET ON-DEMAND MODEL

S180 CALCULATE ON-DEMAND TARGET DRIVE FORCE BASED ON VIRTUAL ACCELERATION

S190 CALCULATE ON-DEMAND TARGET GEAR STAGE IN ACCORDANCE WITH SECOND SHIFTING SCHEDULE

S200 CONTROL ELECTRIC MOTOR AND TRANSMISSION ACCORDING TO ON-DEMAND TARGET DRIVE FORCE AND ON-DEMAND TARGET GEAR STAGE

S140 CALCULATE NORMAL TARGET GEAR STAGE IN ACCORDANCE WITH FIRST SHIFTING SCHEDULE

S150 CONTROL ELECTRIC MOTOR AND TRANSMISSION ACCORDING TO NORMAL TARGET DRIVE FORCE AND NORMAL TARGET GEAR STAGE

END

# FIG. 12

130

110

131 VIRTUAL DRIVING ENVIRONMENT CALCULATION UNIT

200 ON-DEMAND MODEL

50

PARAMETER

201

VA

132 ON-DEMAND TARGET DRIVE FORCE CALCULATION UNIT

OF

OF

133 ON-DEMAND TARGET GEAR STAGE CALCULATION UNIT

50

110

SHIFTING SCHEDULE SETTING

P10

OG

D10 ON-DEMAND MODEL DATABASE

200-A

201-A

200-B

201-B

200-C

201-C

# FIG. 13

START

S110 — ACQUIRE VARIOUS INFORMATION

S120 — ON-DEMAND MODE?

NO

YES

S160 — ACQUIRE TARGET ON-DEMAND MODEL

S300 — SHIFTING SCHEDULE SETTING PROCESS

S170 — CALCULATE VIRTUAL ACCELERATION USING TARGET ON-DEMAND MODEL

S180 — CALCULATE ON-DEMAND TARGET DRIVE FORCE BASED ON VIRTUAL ACCELERATION

S191 — CALCULATE ON-DEMAND TARGET GEAR STAGE IN ACCORDANCE WITH SET SHIFTING SCHEDULE

S200 — CONTROL ELECTRIC MOTOR AND TRANSMISSION ACCORDING TO ON-DEMAND TARGET DRIVE FORCE AND ON-DEMAND TARGET GEAR STAGE

S130 — CALCULATE NORMAL TARGET DRIVE FORCE BASED ON OPERATED STATE OF DRIVING OPERATION MEMBER AND TRAVEL STATE OF BATTERY ELECTRIC VEHICLE

S140 — CALCULATE NORMAL TARGET GEAR STAGE IN ACCORDANCE WITH FIRST SHIFTING SCHEDULE

S150 — CONTROL ELECTRIC MOTOR AND TRANSMISSION ACCORDING TO NORMAL TARGET DRIVE FORCE AND NORMAL TARGET GEAR STAGE

END

# FIG. 14

FIG. 15

ON-BOARD EQUIPMENT CONTROL DEVICE — 101b

20 — HMI

50 — SENSOR SYSTEM

110 — MODE INFORMATION ACQUISITION UNIT

131 — VIRTUAL DRIVING ENVIRONMENT CALCULATION UNIT

200 — ON-DEMAND MODEL

201 — PARAMETER

D10 — ON-DEMAND MODEL DATABASE

170 — VIRTUAL SOUND GENERATION UNIT

171 — SOUND PRESSURE CALCULATION

172 — FREQUENCY CALCULATION

180 — SPEAKER CONTROL UNIT

190 — INSTRUMENT CONTROL UNIT

21 — SPEAKER

23 — INSTRUMENT

**EUROPEAN SEARCH REPORT**

Application Number

EP 25 20 9372

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 12 090 861 B2 (TOYOTA MOTOR CO LTD [JP]) 17 September 2024 (2024-09-17) | 1-4,8-14 | INV.<br>B60L15/20 |
| A | * column 12, line 68 - column 13, line 13 * | 5-7 | B60L50/60 |
| | ----- | | |
| Y | US 7 678 005 B2 (TUCKFIELD CHRISTOPHER A [US]) 16 March 2010 (2010-03-16) | 1-4,8-14 | |
| A | * column 16, line 19 - line 35; figures 3,4 * | 5-7 | |
| | ----- | | |
| Y | US 2024/278651 A1 (NORRIS MARK [US] ET AL) 22 August 2024 (2024-08-22)<br>* paragraph [0027] *<br>* paragraph [0034] * | 11 | |
| | ----- | | |

TECHNICAL FIELDS
SEARCHED (IPC)

B60L

The present search report has been drawn up for all claims

| Place of search | Date of completion of the search | Examiner |
|---|---|---|
| The Hague | 18 March 2026 | Berkus, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 9372

18-03-2026

| Patent document cited in search report | | Publication date | Patent family member(s) | | Publication date |
|---|---|---|---|---|---|
| US 12090861 | B2 | 17-09-2024 | CN | 114056121 A | 18-02-2022 |
| | | | JP | 7302548 B2 | 04-07-2023 |
| | | | JP | 2022030838 A | 18-02-2022 |
| | | | US | 2022041062 A1 | 10-02-2022 |
| | | | US | 2024181894 A1 | 06-06-2024 |
| | | | US | 2024399888 A1 | 05-12-2024 |
| | | | US | 2025276583 A1 | 04-09-2025 |
| US 7678005 | B2 | 16-03-2010 | CN | 101674950 A | 17-03-2010 |
| | | | EP | 2094518 A1 | 02-09-2009 |
| | | | JP | 5346814 B2 | 20-11-2013 |
| | | | JP | 2010513141 A | 30-04-2010 |
| | | | KR | 20090114355 A | 03-11-2009 |
| | | | US | 2008146407 A1 | 19-06-2008 |
| | | | WO | 2008076418 A1 | 26-06-2008 |
| US 2024278651 | A1 | 22-08-2024 | CN | 117916116 A | 19-04-2024 |
| | | | EP | 4334161 A1 | 13-03-2024 |
| | | | JP | 2024526571 A | 19-07-2024 |
| | | | KR | 20240024214 A | 23-02-2024 |
| | | | US | 2024278651 A1 | 22-08-2024 |
| | | | WO | 2022271977 A1 | 29-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019178741 A
- JP 2018191366 A
- JP 2018 A
- JP 191366 A